Europäisches Patentamt

European Patent Office

Office européen des brevets

(19)

(11) Publication number: **0 257 040**
**B1**

(12) **EUROPEAN PATENT SPECIFICATION**

(45) Date of publication of patent specification: **12.09.90**

(21) Application number: **87900382.0**

(22) Date of filing: **17.11.86**

(86) International application number:
**PCT/US86/02458**

(87) International publication number:
**WO 87/04992 27.08.87 Gazette 87/19**

(51) Int. Cl.⁵: **B 64 G 1/40, F 02 K 9/50**

(54) **LOW PRESSURE REACTION CONTROL PROPULSION SYSTEM FOR A SPACECRAFT.**

(30) Priority: **18.02.86 US 830306**

(43) Date of publication of application:
**02.03.88 Bulletin 88/09**

(45) Publication of the grant of the patent:
**12.09.90 Bulletin 90/37**

(84) Designated Contracting States:
**DE FR GB IT**

(56) References cited:
**FR-A-2 063 672**
**FR-A-2 446 385**
**US-A-3 300 981**

(73) Proprietor: **Hughes Aircraft Company**
**7200 Hughes Terrace P.O. Box 45066**
**Los Angeles, California 90045-0066 (US)**

(72) Inventor: **APFEL, Steven, L.**
**4317 Ocean**
**Manhattan Beach, CA 90266 (US)**

(74) Representative: **Colgan, Stephen James et al**
**CARPMAELS & RANSFORD 43 Bloomsbury**
**Square**
**London WC1A 2RA (GB)**

Courier Press, Leamington Spa, England.

EP 0 257 040 B1

## Description

This invention relates to a spacecraft propulsion system and particularly to a propulsion system which efficiently integrates the apogee boost and reaction control propulsion system components.

Spacecraft such as unmanned satellites which must be boosted into high earth orbits such as geostationary orbits are typically injected into a low earth orbit, for example, by an unmanned launch vehicle or by a manned spaced shuttle orbiter. Once in the low altitude orbit, many satellites must be boosted by their own propulsion system to reach the desired final orbital position. In one type of prior art propulsion system, the satellite is boosted by first firing a solid rocket perigee kick motor which is jettisoned after it is exhausted and final orbit is achieved by firing a liquid fuel apogee kick motor (AKM). New generation satellites employ a single liquid fuel AKM to perform the orbit transfer function. Satellites boosted into high earth orbit are also equipped with a number of relatively small thrust motors which comprise the reaction control system (RCS) which is used to make fine changes in spacecraft orbit and position and for station keeping. In the design of satellites and their propulsion systems, designers are constantly striving to improve the efficiency, performance, reliability, and operational lifespan of such propulsion systems. A known feature employed in such systems is the incorporation of a bellows tank to improve the supply of liquid propellant to a thruster; such a system is disclosed in US—A—3300981.

US—A—3300981 which corresponds to the features of the preamble of claim 1 discloses a liquid propellant motor which includes starting means whereby a small auxiliary body of liquid propellant is contained within a collapsible container disposed in the propellant tank so that the auxiliary body of liquid propellant is subjected to the force exerted by a propellant pressuring gas but is isolated therefrom. The starting means is provided to utilize the auxiliary body of propellant during the initial period of rocket motor operation, thus ensuring an initial flow of propellant which is free from gas bubbles. In contrast to this, the system of the present invention is designed such that the propellant driven to the thruster is completely separated from the pressuring gas at all times.

Furthermore, in the system of the present invention the propellant tank is only ever exposed to a much lower pressure than the pressure to which the bellows are exposed, whereas the propellant tank and bellows of US—A—3300981 are both exposed to the same high pressure, since the bellows are positioned within the propellant tank.

One type of present day satellite propulsion system integrates the fuel supply systems of the RCS and AKM. Integration is desirable to enable the RCS to take advantage of residual fuel not expended by the AKM which would otherwise be unusable if the systems were separated. Both of these propulsion systems operate by controlled mixing of a liquid fuel and oxidizer (hereinafter collectively referred to as propellant) which produces a hypergolic reaction (combustion upon contact). Fluid tanks filled with liquid fuel and oxidizer have a gas space which are initially pressurized to a high level. During AKM firing, the fuel and oxidizer tanks pressure is regulated to maintain this high pressure level using an external source of gas pressure (typically helium). When AKM firing is completed, pressure regulation of the fuel tanks is ended and the remaining propellant in the tanks is used by the RCS thrusters operating in what is known as a "blowdown" mode. As the RCS thrusters periodically consume fuel within the tanks, propellant pressure is gradually reduced to a point where efficient and reliable operation of the RCS thrusters is no longer possible. Therefore, at a given pressure level, the RCS must be deactivated even though a supply of fuel and oxidizer remains. Consequently, a greater mass of fuel and oxidizer must be carried onboard the spacecraft to insure that sufficient usable fuel and oxidizer are available for the desired RCS functions.

The present day integrated spacecraft propulsion systems of the type described above have a number of disadvantages. Since the fuel and oxidizer tanks must be designed to withstand high internal pressures, they must be very strong, thick-walled tanks having considerable mass. Furthermore, the tank pressurization system must be fairly complex in order to provide the desired level of pressurization and pressure control. The existencé of residual fuel and oxidizer within the tanks decreases the total stage efficiency of the spacecraft (defined as the mass of the initial usable propellant divided by the total stage mass). Finally, thrusters which must be designed to operate over a range of supply pressures require design compromises which produce less than optimal performance. The above considerations impose fundamental limits in propulsion system efficiency and performance achievable with current integrated liquid fuel satellite propulsion systems.

Designers of spacecraft propulsion systems are now turning their attention toward designing pump-fed propulsion systems. Pump-fed systems employ a fuel-pressurizing pump which receives liquid fuel or oxidizer from the storage vessels and supplies it under pressure to the thrusters. For pump-fed systems, the liquid fuel-containing vessels need be pressurized to only a fairly low level since the only requirement is that fuel supplied to the pump must not cavitate during pumping operation. The advantages of pump-fed systems include higher performance and greater stage efficiencies. The higher stage efficiencies result from the use of lighter, thin-walled liquid tanks and a smaller, less complex tank pressurization system. Further, the pump-fed systems permit usage of nearly all of the liquid within the vessels and provide nearly uniform propellant pressures. Although the above-mentioned advantages are provided for the AKM, problems are encountered in designing the relatively small RCS thrusters to operate with the pump-fed AKM. The small RCS thrusters cannot operate from the same pumps as the AKM, as it is impractical to start and stop these relatively large pumping capacity units for each RCS maneuver. Small pumps for the RCS are not currently available and the low pressure within the propellant tanks is insufficient to operate conventional RCS thrusters. The development, testing and qualification of new RCS pumps or low pressure RCS thrusters would be an extremely expensive and time-consuming process. Therefore, it is currently impractical to integrate a pressure-fed RCS into a pump-fed AKM without modifications to the propulsion system that defeat some of the advantages inherent with the pump-fed system.

During the course of development of this invention by the inventors, a number of alternate design solutions were considered. One proposed improved propulsion system would employ a pump-fed AKM which would achieve benefits in terms of AKM performance (due to constant propellant supply pressure) and increase stage efficiency since thin-walled lightweight propellant tanks could be used. Once the AKM function is complete, the system would use a special low pressure RCS thruster which would operate in the same fashion as a conventional pressure-fed system; that is, the thruster would operate in a straight blowdown mode until its lowest operating pressure level is reached. The advantages of such a design proposal are that the system integrates the AKM and RCS propellant systems, it is no more complex than the present systems, and the stage efficiency is improved compared to current systems. This design solution, however, has several disadvantages. First, a new low pressure RCS thruster would have to be developed which would be a major and expensive undertaking. Second, thermal requirements for the propellant feed system are extremely stringent. Thruster inlet pressures of 345 $kNm^{-2}$ (50 psi) gives RCS thruster chamber pressures of about 138 $kNm^{-2}$ (20 psi). The vapor pressure of one commonly used oxidizer at 37.8°C (100°F) is 228 $kNm^{-2}$ (33 psi), and at 27.8°C (82°F) is 138 $kNm^{-2}$ (20 psi). If the chamber pressure equalled or approached the vapor pressure, the liquid would undergo a phase change which would interrupt operation of the thruster. Therefore, the need for precise thermal control would be necessary in order to prevent fuel vaporization within the thruster chambers. Finally, lower performance of a low pressure RCS thruster would be anticipated as compared within conventional high pressure RCS thrusters. This lower performance of the low pressure RCS thruster would increase the propellant requirements for altitude control with a compounding effect on the propellant mass necessary for AKM operation.

Another proposed design solution was to provide a non-integrated system which employs a pump-fed AKM and a separate RCS propulsion system which operates in a straight blowdown mode. Since the propellant tanks of the blowdown RCS propulsion system are considerably smaller than those needed to supply the AKM, the mass disadvantage of high pressure tankage is minimized. The pressure blowdown range of the RCS system could be from about 2400 to 690 $kNm^{-2}$ (350 to 100 psi). The advantages of such a blowdown system is its simplicity, since no new components are needed. The major disadvantages of such a design approach are that the residuals in the AKM tanks are unusable in the RCS (because the systems are separate) and that the blowdown range of the RCS thrusters is large, giving a lower performance over the life of the spacecraft.

Still another design proposal was to incorporate an accumulator that would use either the AKM fuel pump or a smaller auxiliary pump to refill small high-pressure tanks. These tanks could be blown down normally and refilled using the pump which could be powered by spacecraft batteries. The advantages of such a system are that the primary tanks and helium system are optimized for a pump fed system. The disadvantage of this system is that the auxiliary pumps must be operated several times during the spacecraft life, which is typically about ten years. A pump design that can reliably operate over a ten-year mission has not yet been developed or qualified. If AKM pumps were used, the system would be inefficient since they have a capacity much larger than required for filling small RCS accumulators. Finally, system redundancy requires multiple pumps and highly complex manifolding and electrical systems. Accordingly, this design proposal was also determined to be unacceptable.

In view of the foregoing, there is a need to provide a highly efficient, integrated RCS/AKM propulsion system which provides the advantages of a pump-fed AKM without imposing severe limitations to the RCS function or require design changes which defeat the advantages of a pump-fed AKM.

According to the present invention as indicated in Claim 1 there is provided a satellite propulsion system adapted to supply liquid propellant to one or more thrusters, comprising:

a propellant tank for holding liquid propellant,

a gas pressure source, which provides gas pressure at a first predetermined magnitude, and

a bellows tank having a collapsible bellows installed therein to divide said bellows tank into a side for containing gas, communicating with said gas pressure source, and a side for containing propellant, the relative volume of said gas side and said propellant side varying as said bellows collapses and expands, said bellows tank and said bellows adapted to be cycled to supply said propellant to said thrusters until said propellant side is emptied and thereafter refilled with said propellant,

characterised in that the system further comprises a first conduit communicating said propellant tank with said propellant side of said bellows tank, and

a first valve means in said first conduit for controlling propellant flow in said first conduit,

wherein said propellant tank is charged with gas at a second predetermined magnitude which is substantially less than said first predetermined magnitude such that said propellant tank may be designed to weigh less than if said propellant tank was exposed to said first predetermined magnitude of pressure, and wherein said propellant side of said bellows tank communicates with said thruster and said propellant tank.

According to another aspect of the present invention as indicated in Claim 9 there is provided a method of operating a satellite propulsion system of the type including a gas pressure source, providing gas pressure at a first predetermined magnitude, and a propellant tank, charged with gas at a second predetermined magnitude which is substantially less than said first predetermined magnitude, holding liquid propellant,

providing a bellows tank having a collapsible bellows installed therein to divide said bellows tank into a gas side and a propellant side, the relative volume of said gas side and said propellant side varying as said bellows collapses and expands, and said propellant side communicating with a thruster and said propellant tank and said gas side communicating with said gas pressure source,

comprising the steps of: transmitting said propellant to said thruster by:

closing a first conduit between said propellant tank and said propellant side of said bellows tank,

opening a second conduit communicating said gas pressure source with said gas side of said bellows tank, and

opening a third conduit communicating said thruster with said propellant side of said bellows tank; and

refilling said propellant side of said bellows tank by:

closing said second and third conduits,

venting said gas side of said bellows tank such that the pressure in said gas side is less than the pressure of said propellant in said propellant tank, and

opening said first conduit whereby propellant flows into said propellant side of said bellows tank.

Additional benefits and advantages of the present invention will become apparent to those skilled in the art to which this invention relates from the subsequent description of the preferred embodiments and the appended claims, taken in conjunction with the accompanying drawings in which:

Figure 1 is an overall pictorial view of a conventional liquid propulsion system shown installed in a representative communications satellite.

Figure 2 is a schematic version of a representation integrated RCS/AKM propulsion system according to the prior art.

Figure 3 is a schematic view of the bellows tank component of the propulsion system in accordance with this invention.

Figure 4 is a simplified schematic representation of the propulsion system in accordance with a first embodiment of this invention showing the bellows supplying propellant to a thruster.

Figure 5 is a simplified schematic representation of the propulsion system shown in Figure 4 showing the bellows in a venting mode.

Figure 6 is a simplified schematic representation of the propulsion system shown in Figure 3 showing the bellows in a refilling mode.

Figure 7 is a schematic view of the propulsion system shown in Figure 3 showing the bellows repressurized.

Figure 8 is a pictorial view of a complete propulsion system of the type shown in Figure 3 for providing propellant to a plurality of AKM and RCS thrusters.

Figure 9 is a bellows in accordance with a second embodiment of this invention.

Figure 10 is a simplified schematic representation of a propulsion system in accordance with a second embodiment of this invention employing the bellows shown in Figure 9.

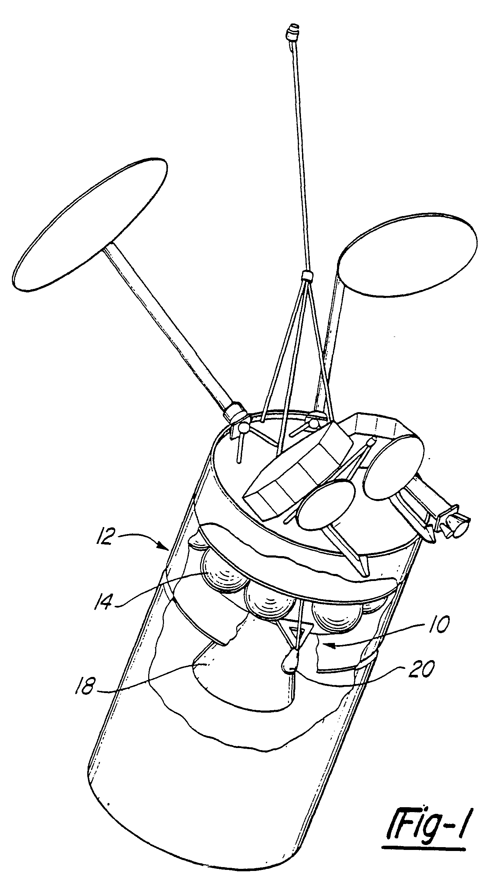

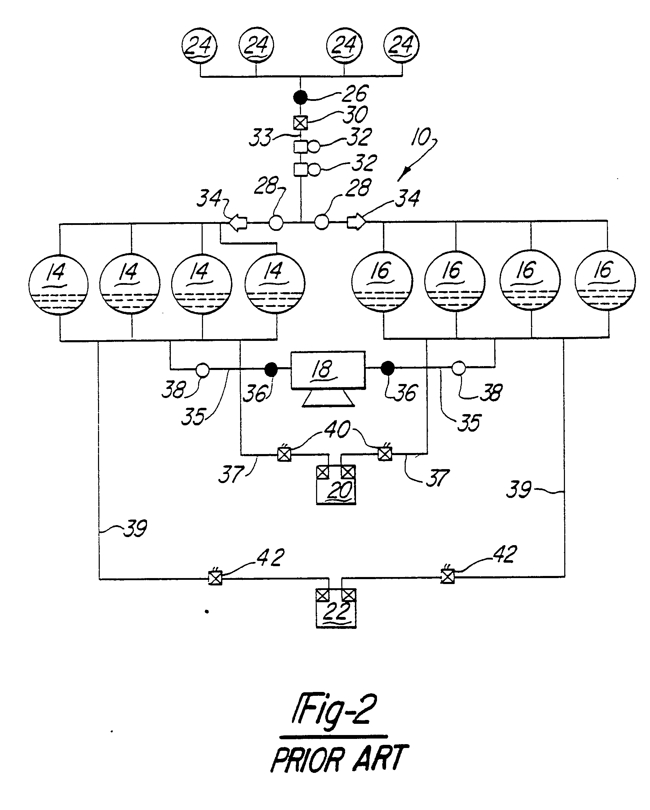

Figures 1 and 2 illustrate a propulsion system 10 according to the prior art which is incorporated into satellite 12 which could be one of any number of types of spacecraft which are placed in orbit. As previously discussed, satellite 12 would likely be placed in a low earth orbit and propulsion system 10 would be used to boost the spacecraft to the desired orbit and orientation. As best shown in Figure 2, propulsion system 10 comprises a plurality of fuel tanks 14 and oxidizer tanks 16 which feed AKM 18 and a pair of RCS thruster banks 20 and 22, each comprising one or more individual thrusters. The AKM nozzle and a nozzle of a RCS thruster along with several propellant tanks are shown in Figure 1. Helium bottles 24 are employed to pressurize fuel and oxidizer tanks 14 and 16. Conduits represented by solid lines are employed to connect the various elements as shown in Figure 2. Helium bottles 24 are connected to fuel and oxidizer tanks 14 and 16 by conduit 33 having open squib valves 28, latch valve 30, closed squib valve 26, pressure regulators 32, and check valves 34. Fuel and oxidizer are removed from the associated tanks and conducted to AKM 18 via branched conduits 35 having closed squib valves 36 and opened squib valves 38. Fuel and oxidizer are similarly conducted to a pair of RCS thruster banks 20 and 22 (each including one or more individual thrusters) by conduits 37 and 39, and their flow is controlled by latch valves 40 and 42. As described above and throughout this specification, the term "squib valve" is intended to identify a type of valve which is typically pyrotechnically activated to change its state only once from an open to a closed condition or vice versa. Latch valves are typically electrically operated valves which can move between opened and closed positions in response to control commands.

Operation of propulsion system 10 according to the prior art proceeds as follows. Fuel and oxidizers within tanks 14 and 16 are initially pressurized to approximately 1800 $kNm^{-2}$ (260 psi). During AKM firing, squib valve 26 is energized and the pressure in tanks 14 and 16 is regulated to maintain a desired pressure by helium bottles 24 and regulators 32. Starting of AKM 18 operation is initiated by firing squib valves 36. Once the AKM 18 operation is completed, squib valve 38 is fired to prevent propellant leakage. When the apogee function is completed, pressure regulation of tanks 14 and 16 is stopped by firing squib valves 28 and the remaining propellants within the tanks are used by RCS thruster banks 20 and 22. Operation of RCS proceeds in a a straight blowdown mode, i.e., liquid is supplied from the tanks at whatever pressure is available within the tanks. Present design RCS thrusters are able to operate at supply pressures down to approximately 900 $kNm^{-2}$ (130 psi). Consequently, once the blowdown ratio of 2:1 is achieved (1800 $kNm^{-2}$ (260 psi) initial pressure reduced to 900 $kNm^{-2}$ (130 psi)), efficient operation of the RCS ceases. As previously described, the present propulsion system 10 possesses inherent inefficiencies due to the existence of residual fuel within tanks 14 and 16. The necessity of using relatively thickwalled and therefore heavy tanks 14 and 16, which are required to withstand the internal pressures to which they are subjected also limits the efficiency of this prior art propulsion system. Moreover, certain design tradeoffs are present when designing thrusters for RCS banks 20 and 22, which must be operated over a range of supply pressures.

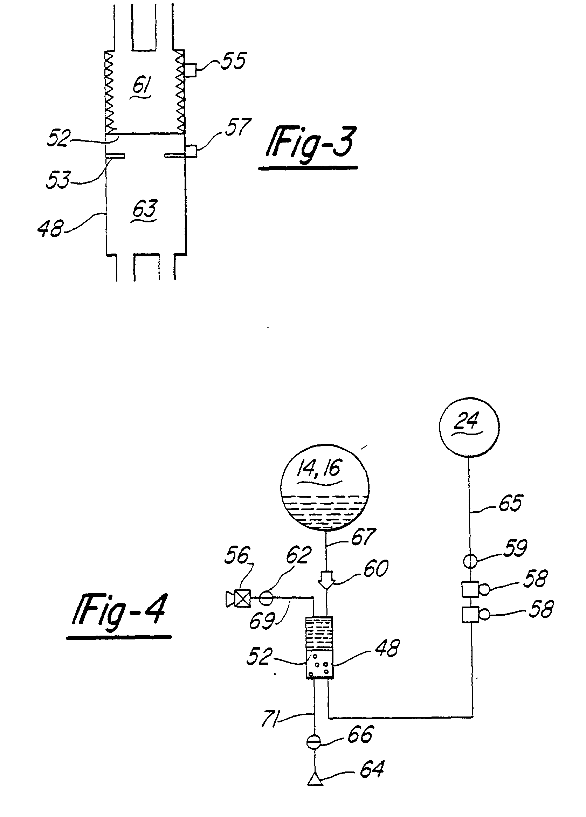

A propulsion system 46 in accordance with the first embodiment of this invention is shown in Figures 3 through 8. Those components of propulsion system 46 which are substantially identical to elements of prior art system 10 are designated by like reference numbers. For illustration purposes, propulsion system 46 is shown in simplified form in these Figures in that only a single thruster 56 and only one of the fuel or oxidizer supply systems is shown since they are identical. Propulsion system 46 employs a pumpfed AKM and an RCS thruster system which is fed by refillable bellows tank 48. As best shown in Figure 3, bellows tank 48 is provided having an internal collapsible bellows 52. A mechanical stop 53 is provided to limit the maximum extension of bellows 52 and a pair of limit switches 55 and 57 are provided to sense the position of the bellows. Switches 55 and 57 may be of any known type of position sensing element such as microswitches, proximity switches, light interrupters, etc. Helium gas is supplied by bottle 24 at a high pressure and is conducted to the inside of bellows tank 48 and outside of bellows 52 (hereinafter gas side 63) which urges the bellows to collapse, whereas the internal volume of bellows 52 (hereinafter propellant side 61) communicates with a fuel or oxidizer tank 14 or 16 and to RCS thruster 56. Another embodiment of this invention could feature a bellows tank and bellows wherein gas side 63 is inside the bellows and propellant side 61 is outside the bellows. Regulators 58 and valve 59 are provided in conduit 65 which supplies helium to bellows tank 48. Check valve 60 prevents reverse flow of fuel or oxidizer from tanks 14 and 16 in conduit 67, and valve 62 modulates the flow of propellant through conduit 69 to RCS thruster 56. Vent 64 and valve 66 are provided within conduit 71 communicating with gas side 63 of bellows tank 48. As will be explained in greater detail below, vent 64 is used to exhaust gas side 63 to space. In order to prevent freezing of vent 64 caused by rapid expansion of gas through the vent, an orifice or another type of gas flow restrictor may be provided.

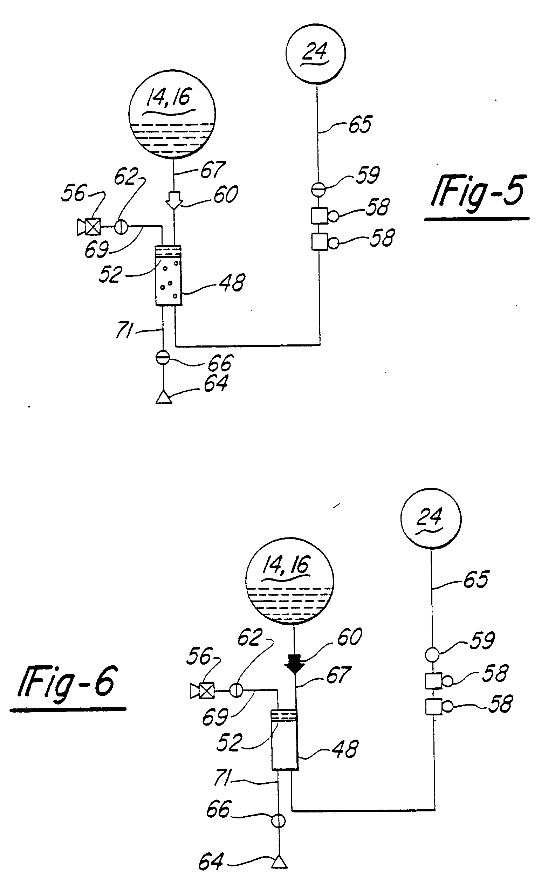

Operation of propulsion system 46 will now be described with reference to Figures 4 through 7. Tanks 14 and 16 are initially pressurized prior to launch and bellows tank propellant side 61 is initially filled with propellant. Figure 4 illustrates the condition of the components during launch of satellite 12 or during RCS thruster 56 firing. Valve 66 is closed and helium under pressure is provided to gas side 63 of bellows tank 48 by opening valve 59. The pressure of helium in bellows tank 48 would be regulated to preferably about 1800 $kNm^{-2}$ (260 psi). This gas pressure therefore provides the same (or slightly reduced) pressure of fuel or oxidizer to RCS thruster 56. RCS thruster 56 is permitted to burn and consume the propellant within bellows tank propellant side 61. As an alternate operating scheme, once gas side 63 of bellows tank 48 is pressurized, valve 59 could be closed and the bellows tank would be operated in a blowdown mode. Preferably, if operated in a blowdown mode, bellows 52 would be blown down to a range of 2:1 or less in order to avoid thruster performance penalties. Valve 62 is operated to reguate the flow of propellant to RCS thruster 56.

Figure 5 illustrates the condition of components of propulsion system 46 once fuel within bellows tank 48 has been consumed by RCS thruster 56 (or once the blowdown range is reached). Now with reference to Figure 6, once this condition is achieved as indicated by limit switch 55, valve 59 is closed and valve 66 opens to vent gas side 63 of bellows tank 48 to space. Once gas side 63 is vented, bellows 52 is exposed to a lower pressure on the gas side than on propellant side 61, since the propellant tank 14 or 16 is pressurized to a low level, causing the bellows to expand. Once this condition is achieved, check valve 60 opens and bellows 52 is refilled until the bellows reaches positive stop 53.

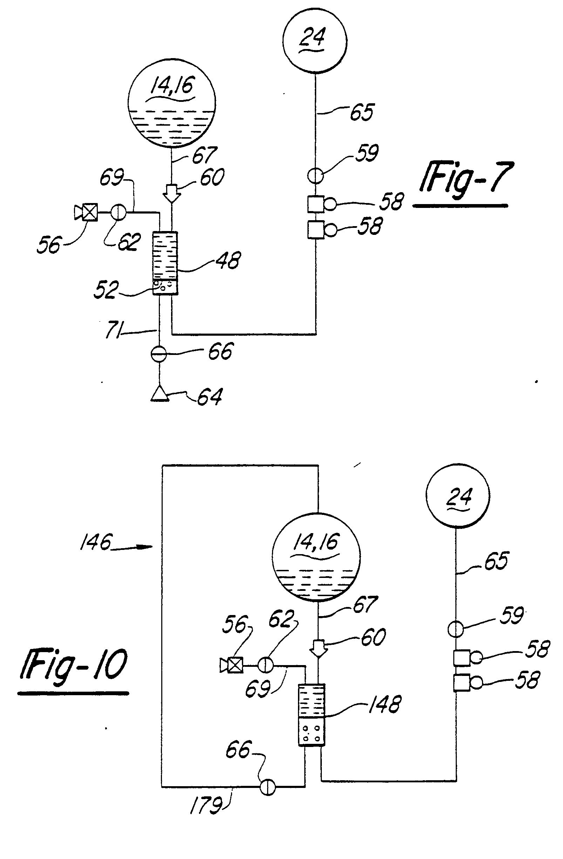

Once bellows 52 is completely refilled, as indicated by limit switch 57, the configuration depicted in Figure 7 occurs wherein valve 66 is again closed and valve 59 is opened to pressurize gas side 63 of bellows 52. As previously explained, upon bellows tank 48 repressurization, valve 59 may either be left open to enable pressure regulated operation, or shut to operate bellows 52 in a blowdown mode.

One significant advantage of the propulsion system 46 in accordance with this invention is that it allows the use of thin-walled main propellant tanks 14 and 16 for both the AKM and RCS thrusters propellant systems. This thin-walled tank capability is achievable since the main tanks are pressurized only to a level sufficient to transport propellant to the AKM pump and bellows tank 46. Although the helium system for propulsion system 46 is larger than that for some of the design proposals described previously, it is not large enough to constitute a serious design shortcoming. Another advantage of propulsion system 46 is that there are virtually no new technology requirements other than flight qualifications of bellows tank 48 and the design of appropriate valves and orifices.

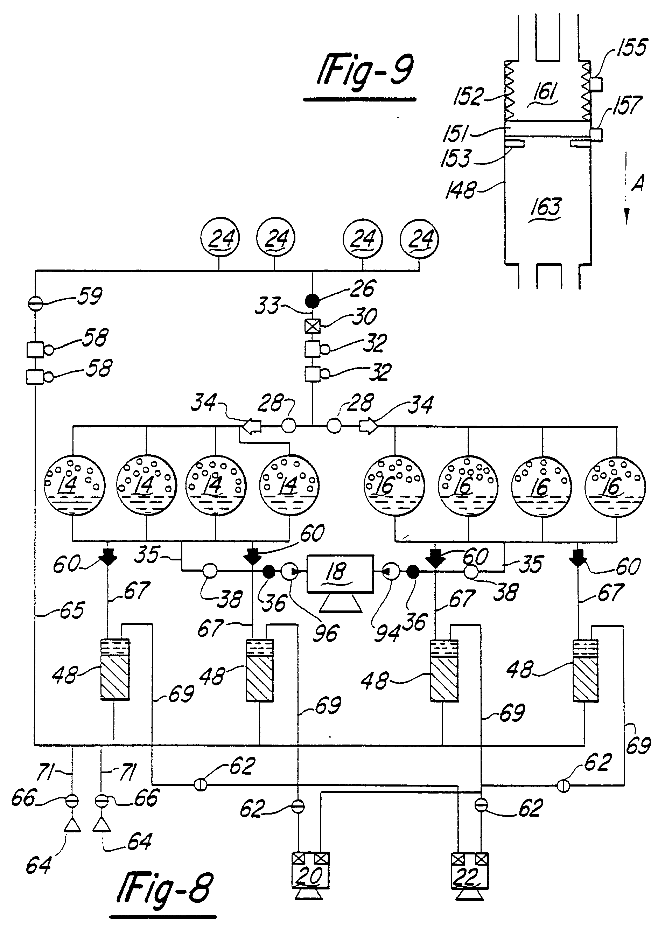

Figure 8 shows a complete system utilizing the principles and features of propulsion system 46. In this Figure, components which are similar to conventional components shown in Figure 2 through 7 are identified by the same reference numbers. As shown in Figure 8, propulsion system 46 comprises a plurality of fuel tanks 14 and oxidizer tanks 16 which are pressurized to a low level (unlike the propulsion system shown in Figure 2) to supply fuel and oxidizer to AKM 18. A pair of RCS thruster banks 20 and 22 are also provided. Helium bottles 24 are employed to pressurize both the fuel and oxidizer tanks 14 and 16, and bellows tanks 48, and are connected to those components by conduits 33 and 65. A low level of pressurization is provided for fuel and oxidizer tanks 14 and 16 by conduit 33 which flows through squib valve 26, latch valve 30, regulators 32, open squib valves 28 and gas check valve 34. Fuel and oxidizer are provided to AKM 18 by conduits 35 through squib valves 36 and 38 and propellant pumps 94. Fuel and oxidizer are also provided to bellows tanks 48 by conduits 67 which include check valves 60. Helium under pressure is provided to bellows tanks through conduits 65 which pass through regulators 58 and valve 59. The flow of propellant to thruster banks 20 and 22 is controlled by valves 62 in conduit 69 and venting of bellows tank 48 is controlled by valves 66 in conduits 71. Propulsion system 46 operates precisely like the system as described in Figures 3 through 7 and illustrates that each RCS thruster bank 20 and 22 is provided with both fuel and oxidizer from associated bellows tanks 48.

Several improvements in the bellows RCS propulsion system 46 described above are envisioned. A very high-pressure RCS could be developed for performance higher than present systems. Bellows tanks for aircraft are presently available with high reliability for 10.3 MNm$^{-2}$ (1500 psi) applications. Such a very high pressure system would require improvements in the helium pressurization system and the RCS thrusters, but the main tanks and propellant storage would be left unmodified. As many bellows tanks 48 as are necessary may be employed to provide as many RCS thruster banks 20 and 22 with fuel and oxidizer. The bellows system could also be used as a pumpless fluid transfer system for refilling fluid tanks by using it as a positive displacement pump for propellant transfer. Bellows tanks could further be used as a balancing system by filling a bellows with a heavy material, such as mercury, and transferring it from one tank to another as a spin balance control or center of gravity shifting mechanism.

In accordance with a second embodiment of this invention, propulsion system 146 shown in Figure 10, like propulsion system 46, employs a bellows tank 148. This system varies principally from propulsion system 46 in that bellows tank 148 is repressurized by the spin force gradient of a rotating spacecraft 12. Propulsion system 146 also incorporates helium bottle 24 which pressurizes bellows tank 148 through conduit 65 including valve 59 and regulators 58. The contents of main tank 14 or 16 are conducted to bellows tank 148 by conduit 67 which passes through check valve 60. The fuel within bellows tank 148 is conducted to RCS thruster 56 and passes through conduit 69 and valve 62. Instead of providing a conduit (71) which vents gas side 163 of the bellows to space like the first embodiment, a conduit 179 having valve 66 is connected between gas side 163 of bellows tank 148 and main tank 14 or 16. The details of bellows tank 148 are shown in Figure 9 wherein bellows 152 includes mechanical stop 153, limit switches 155 and 157, and optionally includes a relatively massive piston 151. Bellows tank 148 is mounted such that the spin force gradient designated by arrow A tends to cause bellows 152 to expand.

In operation, propulsion system 146 is mounted to a spun portion of satellite 12 such that the spin force gradient is provided with acts on piston 151 and the propellant in bellows tank 148 to refill bellows propellant side 161 with propellant when necessary. As shown in Figure 10, when it is desirable to refill bellows 152, valve 66 opens and the centrifugal force acting on piston 151 and/or any propellant in propellant side 161 produces a reduced pressure within the bellows propellant side causing fuel in the main tank 14 or 16 to refill the bellows. Otherwise propulsion system 146 operates like system 46 previously described.

Both of the above-described embodiments according to this invention provide a number of significant advantages over present systems. The main tanks 14 and 16 of both systems 46 and 146 may be quite thin and lightweight as they only have to contain sufficient pressure (typically 345 kNm$^{-2}$ (50 psi)) as needed to prevent cavitation at the inlets of pumps 94. Additionally, the low-pressure main tanks require less helium gas, resulting in a lightened pressurization system. The system further provides higher mean pressure of propellant to the RCS thrusters, providing higher performance. This enhanced performance gives either a lowering of the initial RCS propellant requirements or an increase in operational life for a given propellant loading. Further, residuals from the main tanks can be completely consumed by the RCS thrusters leaving negligible residual fuel. Therefore, if the main pump-fed AKM 18 demonstrates a higher than predicted performance, excess propellants can be used by the RCS thrusters.

While the above description constitutes the preferred embodiments of the present invention, it will be appreciated that the invention is susceptible to modification, variation and change without departing from the proper scope and fair meaning of the accompanying claims.

**Claims**

1. A satellite propulsion system (46) adapted to supply liquid propellant to one or more thrusters (56), comprising:

a propellant tank (14, 16) for holding liquid propellant,

a gas pressure source (24) which provides gas pressure at a first predetermined magnitude, and

a bellows tank (48) having a collapsible bellows (52) installed therein to divide said bellows tank (48) into a side (63) for containing gas, communicating with said gas pressure source (24), and a side (61) for containing propellant, the relative volume of said gas side (63) and said propellant side (61) varying as said bellows (52) collapses and expands, said bellows tank (48) and said bellows (52) adapted to be cycled to supply said propellant to said thrusters (56) until said propellant side (61) is emptied and thereafter refilled with said propellant,

characterised in that the system further comprises a first conduit (67) communicating said propellant tank (14, 16) with said propellant side (61) of said bellows tank (48), and

a first valve means (60) in said first conduit (67) for controlling propellant flow in said first conduit,

wherein said propellant tank is charged with gas at a second predetermined magnitude which is substantially less than said first predetermined magnitude such that said propellant tank may be designed to weigh less than if said propellant tank was exposed to said first predetermined magnitude of pressure, and wherein said propellant side (61) of said bellows tank (48) communicates with said thruster (56) and said propellant tank (14, 16).

2. The satellite propulsion system according to Claim 1 further comprising:

a second conduit (65) communicating said gas pressure source (24) with said gas side (63) of said bellows tank (48),

a second valve means (59) in said second conduit (65),

a third conduit (69) communicating said thruster (56) with said propellant side (61) of said bellow tank (48),

a third valve means (62) in said third conduit (69) for controlling the flow of propellant to said thruster (56),

a fourth conduit (71) communicating to said gas side (63) of said bellows tank (48) and for venting said gas side (63) of said bellows (52), and

a fourth valve means (66) in said fourth conduit (71) wherein, when said propellant side (61) of said bellows (52) is filled with propellant, said gas side (63) of said bellows (52) may be pressurized, thereby pressurizing said propellant which is transmitted to said thruster (56) when said third valve means (62) is opened, and wherein said propellant side (61) of said bellows (52) may be refilled with propellant by opening said fourth valve means (66) and closing said second valve means (59), thereby venting said gas side (63) of said bellows tank (48) and enabling said propellant to refill said propellant side (61) of said bellows tank (48).

3. The satellite propulsion system according to Claim 2 wherein said fourth conduit (71) is vented to space.

4. The satellite propulsion system according to Claim 2 wherein said propulsion system is fixed to a spun portion of said satellite such when said bellows tank (48) is mounted to said satellite spun portion, centrifugal force acts upon said bellows (52) to urge a change in volumes of said bellows gas (63) and propellant (61) sides, and

wherein said fourth conduit (71) communicates with said propellant tank (14, 16).

5. The satellite propulsion system according to Claim 4 wherein a mass is affixed to said bellows (52) to increase the magnitude of centrifugal force acting on said bellows (52).

6. The satellite propulsion system according to any preceding claim wherein said bellows tank (48) further comprises a mechanical stop means (53) for limiting the range of change in volume of said propellant side (61) of said bellows tank (48).

7. The satellite propulsion system according to any preceding claim wherein said bellows tank further comprises means for sensing the volume of propellant in said propellant side (61) of said bellows tank (48).

8. The satellite propulsion system according to claim 7 wherein said means for sensing comprises a limit switch (55, 57) which senses the position of said bellows (52).

9. A method of operating a satellite propulsion system of the type including a gas pressure source (24), providing gas pressure at a first predetermined magnitude, and a propellant tank (14, 16), charged with gas at a second predetermined magnitude which is substantially less than said first predetermined magnitude, holding liquid propellant,

providing a bellows tank (48) having a collapsible bellows (52) installed therein to divide said bellows tank (48) into a gas side (63) and a propellant side (61), the relative volume of said gas side (63) and said propellant side (61) varying as said bellows (52) collapses and expands, and said propellant side (61) communicating with a thruster (56) and said propellant tank (14, 16) and said gas side (63) communicating with said gas pressure source (24);

comprising the steps of:

transmitting said propellant to said thruster (56) by:

closing a first conduit (67) between said propellant tank (14, 16) and said propellant side (61) of said bellows tank (48),

opening a second conduit communicating said gas pressure source (24) with said gas side of said bellows tank (48), and

opening a third conduit communicating said thruster (56) with said propellant side (61) of said bellows tank (48); and

refilling said propellant side (61) of said bellows tank (48) by:

closing said second and third conduits,

venting said gas side (63) of said bellows tank (48) such that the pressure in said gas side (63) is less than the pressure of said propellant in said propellant tank (14, 16), and

opening said first conduit whereby propellant flows into said propellant side (61) of said bellows tank (48).

10. The method of operating a satellite propulsion system according to Claim 9 wherein:

pressurizing said gas side (63) of said bellows tank (48) occurs by providing a relatively constant pressure from said gas pressure source (24) throughout said transmitting of said propellant to said thruster (56) step.

11. The method of operating a satellite propulsion system according to Claim 9 wherein:

pressurizing said gas side (63) of said bellows tank (48) occurs by providing pressure to said gas side (61) of said bellows (52) only when said propellant side (61) of said bellows (52) is completely refilled, said bellows (52) thereafter operating in a blow down mode as said propellant is transmitted to said thruster (56).

12. The method of operating a satellite propulsion system according to Claim 9, further comprising the steps of:

sensing the position of said bellows (52) in said bellows tank (48) to control said transmitting said propellant and said refilling said propellant steps.

13. The method of operating a satellite propulsion system according to Claim 9 wherein said venting said gas side (63) of said bellows (52) occurs by exposing said gas side (63) of said bellows tank (48) to space.

14. The method of operating a satellite propulsion system according to Claim 9, further comprising the step of:

rotating said bellows tank (48) with a spun portion of said satellite such that centrifugal force acts upon said bellows (52) to urge said bellows (52) to change volume such that said venting said gas side (63) step proceeds by reducing the pressure in said gas side (63) of said bellows (52), thereby causing said refilling said propellant step to occur.

15. A method of operating a satellite propulsion system according to Claim 14 wherein said reducing the pressure step is achieved by communicating said gas side (63) of said bellows tank (48) with said propellant tank (14, 16).

**Patentansprüche**

1. Satellitenantriebssystem (46) zur Versorgung einer oder mehrerer Schubdüsen (56) mit flüssigem Treibstoff, mit

einem Treibstofftank (14, 16) zur Aufnahme von flüssigem Treibstoff,

einer Gasdruckquelle (24), die einen Gasdruck von einer ersten vorbestimmten Größe liefert, und

einem Balgtank (48) mit einem darin angeordneten zusammendrückbaren Balg (52) zur Aufteilung des Balgtanks (48) in eine Seite (63) zur Aufnahme von Gas, die mit der Gasdruckquelle (24) in Verbindung steht, und mit einer Seite (61) zur Aufnahme von Treibstoff, wobei das relative Volumen der Gasseite (63) und der Treibstoffseite (61) variiert, wenn der Balg (52) sich zusammenzieht und sich ausdehnt, und wobei der Balgtank (48) und der Balg (52) zu periodisch sich wiederholendem Betrieb in der Lage sind, um die Schubdüsen (56) mit dem Treibstoff zu versorgen, bis die Treibstoffseite (61) geleert und danach mit dem Treibstoff wieder gefüllt wird,

dadurch gekennzeichnet, daß das System weiterhin aufweist

eine erste Leitung (67), die den Treibstofftank (14, 16) mit der Treibstoffseite (61) des Balgtanks (48) verbindet, und

eine erste Ventileinrichtung (60) in der ersten Leitung (67) zum Steuern des Treibstoffflusses in der ersten Leitung, wobei der Treibstofftank mit Gas bei einer zweiten vorbestimmten Größe druckbelastet ist, die wesentlich geringer ist als die erste vorbestimmte Größe, so daß der Treibstofftank ausgelegt werden kann, ein geringeres Gewicht aufzuweisen, als wenn der Treibstofftank der ersten vorbestimmten Größe des Drucks ausgesetzt würde, und wobei die Treibstoffseite (61) des Balgtanks (48) mit der Schubdüse (56) und dem Treibstofftank (14, 16) in Verbindung steht.

2. Antriebssystem nach Anspruch 1, welches weiterhin aufweist:

eine zweite Leitung (65), die die Gasdruckquelle (24) mit der Gasseite (63) des Balgtanks (48) verbindet,

eine zweite Ventileinrichtung (59) in der zweiten Leitung (65),

eine dritte Leitung (69), welche die Schubdüse (56) mit der Treibstoffseite (61) des Balgtanks (48) verbindet,

eine dritte Ventileinrichtung (62) in der dritten Leitung (69) zum Steuern des Treibstoffflusses zu der Schubdüse (56),

eine vierte Leitung (71), die mit der Gasseite (63) des Balgtanks (48) in Verbindung steht, zum Entlüften der Gasseite (63) des Balgs (52), und

eine vierte Ventileinrichtung (66) in der vierten Leitung (71), wobei, wenn die Treibstoffseite (61) des Balgs (52) mit Treibstoff gefüllt ist, die Gasseite (63) des Balgs (52) unter Druck gesetzt werden kann, wodurch der Treibstoff unter Druck gesetzt wird, der zu der Schubdüse (56) geleitet wird, wenn die dritte Ventileinrichtung (62) geöffnet ist, und wobei die Treibstoffseite (61) des Balgs (52) wieder mit Treibstoff gefüllt werden kann, indem die vierte Ventileinrichtung (66) geöffnet und die zweite Ventileinrichtung (59) geschlossen wird, wodurch die Gasseite (63) des Balgtanks (48) entlüftet und dem Treibstoff ermöglicht wird, die Treibstoffseite (61) des Balgtanks (48) wieder zu füllen.

3. Antriebssystem nach Anspruch 2, bei dem die vierte Leitung (71) zum Weltraum hin entlüftet wird.

4. Antriebssystem nach Anspruch 2, bei dem das Antriebssystem an einem sich drehenden Bereich des Satelliten befestigt ist, so daß, wenn der Balgtank (48) an dem sich drehenden Bereich des Satelliten angeordnet ist, eine Zentrifugalkraft auf den Balg (52) einwirkt, um einen Wechsel in den Volumina der Gasseite (63) und der Treibstoffseite (61) des Balgs herbeizuführen, und bei dem die vierte Leitung (71) mit dem Treibstofftank (14, 16) in Verbindung steht.

5. Antriebssystem nach Anspruch 4, bei dem eine Masse an dem Balg (52) befestigt ist, um die Größe der auf den Balg (52) einwirkenden Zentrifugalkraft zu erhöhen.

6. Antriebssystem nach einem der vorhergehenden Ansprüche, bei dem der Balgtank (48) weiterhin eine mechanische Anschlageinrichtung (53) zur Begrenzung des Bereichs der Volumenänderung der Treibstoffseite (61) des Balgtanks (48) aufweist.

7. Antriebssystem nach einem der vorhergehenden Ansprüche, bei dem der Balgtank (48) weiterhin eine Einrichtung zur Bestimmung des Volumens des Treibstoffs in der Treibstoffseite (61) des Balgtanks (48) aufweist.

8. Antriebssystem nach Anspruch 7, bei dem die Einrichtung zum Messen einen Begrenzungsschalter (55, 57) aufweist, der die Position des Balgs (52) mißt.

9. Verfahren zum Betrieb eines Satellitenantriebssystems des Typs, welcher eine Gasdruckquelle (24), die einen Gasdruck von einer ersten vorbestimmten Größe liefert, und einen unter einem Druck von einer zweiten vorbestimmten Größe, welche wesentlich geringer ist als die erste vorbestimmte Größe, stehenden Treibstofftank (14, 16) zur Aufnahme des flüssigen Treibstoff aufweist, und welcher einen Balgtank (48) mit einem darin installierten Balg (52) zur Unterteilung des Balgtanks (48) in eine Gasseite (63) und eine Treibstoffseite (61) aufweist, wobei das relative Volumen der Gasseite (63) und der Treibstoffseite (61) variiert, wenn der Balg (52) sich zusammenzieht und sich ausdehnt, und wobei die Treibstoffseite (61) mit einer Schubdüse (56) und dem Treibstofftank (14, 16) in Verbindung steht und die Gasseite (63) mit der Gasddruckquelle (24) in Verbindung steht,

dadurch gekennzeichnet,

daß der Treibstoff zu der Schubdüse (56) geleitet wird, indem

eine erste Leitung (67) zwischen dem Treibstofftank (14, 16) und der Treibstoffseite (61) des Balgtanks (48) geschlossen wird,

eine zweite Leitung geöffnet wird, die die Gasdruckquelle (24) mit der Gasseite (63) des balgtanks (48) verbindet, und

eine dritte Leitung geöffnet wird, die die Schubdüse (56) mit der Treibstoffseite (61) des Balgtanks (48) verbindet, und

daß die Treibstoffseite (61) des Balgtanks (48) wieder gefüllt wird, indem

die zweite und die dritte Leitung geschlossen werden,

die Gasseite (63) des Balgtanks (48) entlüftet wird, so daß der Druck in der Gasseite (63) geringer als der Druck des Treibstoffs in dem Treibstofftank (14, 16) ist, und

die erste Leitung geöffnet wird, wodurch Treibstoff in die Treibstoffseite (61) des Balgtanks (48) fließt.

10. Verfahren nach Anspruch 9, bei dem die Gasseite (63) des Balgtanks (48) unter Druck gesetzt wird, indem von der Gasdruckquelle (24) ein relativ konstanter Druck geliefert wird, während der Treibstoff zu der Schubdüse (56) geleitet wird.

11. Verfahren nach Anspruch 9, bei dem die Gasseite (63) des Balgtanks (48) unter Druck gesetzt wird, indem Druck zu der Gasseite (61) des Balgs (52) nur geliefert wird, wenn die Treibstoffseite (61) des Balgs (52) wieder vollständig gefüllt ist, wobei der Balg (52) danach in einem Ausblasemodus arbeitet, wenn der Treibstoff zu der Schubdüse (56) geleitet wird.

12. Verfahren nach Anspruch 9, bei dem weiterhin die Position des Balgs (52) in dem Balgtank (48) gemessen wird, um die Leitung des Treibstoffs und das Wiederauffüllen des Treibstoffs zu steuern.

13. Verfahren nach Anspruch 9, bie dem die Gasseite (63) des Balgs (52) entlüftet wird, indem die Gasseite (63) des Balgtanks (48) dem Weltraum ausgesetzt wird.

14. Verfahren nach Anspruch 9, bei dem weiterhin der Balgtank (48) mit einem sich drehenden Bereich des Satelliten gedreht wird, so daß die Zentrifugalkraft auf den Balg (52) einwirkt, um den Balg (52) so zur Änderung des Volumens zu veranlassen, daß das Entlüften der Gasseite (63) vorgenommen wird, indem der Druck in der Gasseite (63) des Balgs (52) gemindert wird, wodurch das Wiederauffüllen des Treibstoffs herbeigeführt wird.

15. Verfahren nach Anspruch 14, bei dem die Verminderung des Drucks erreicht wird, indem die Gasseite (63) des Balgtanks (48) mit dem Treibstofftank (14, 16) verbunden wird.

**Revendications**

1. Système de propulsion de satellite (46) adapté à la fourniture de propergol liquide à un ou plusieurs propulseurs (56), comprenant:

un réservoir de propergol (14, 16) pour contenir le propergol liquide;

une source de pression de gaz (24) fournissant une pression de gaz à une première valeur prédéterminée; et

un réservoir à soufflet (48), ayant un soufflet (52) pouvant se contracter installé à l'intérieur pour diviser ce réservoir à soufflet (48) en un côté (63) contenant du gaz, communiquant avec la source de pression de gaz (24), et un côté (61) contenant le propergol, les volumes relatifs du côté gaz (63) et du côté propergol (61) variant lorsque le soufflet (52) se contracte ou se dilate, le réservoir à soufflet (48) et le soufflet (52) étant adaptés pour suivre des cycles de fourniture de propergol aux propulseurs (56) jusqu'à ce que le côté propergol (61) soit vidé et ensuite rempli à nouveau de propergol,

caractérisé en ce que le système comprend en outre un premier tuyau (67) faisant communiquer le réservoir de propergol (14, 16) avec le côté propergol (61) du réservoir à soufflet (48); et

des premiers moyens formant valve (60) sur le premier tuyau (67), pour commander le flux de propergol dans le premier tuyau,

dans lequel le réservoir de propergol est chargé en gaz à une seconde valeur prédéterminée, sensiblement inférieure à la première valeur prédéterminée, de sorte que le réservoir de propergol puisse être conçu pour être moins lourd que si ce réservoir de propergol était soumis à la première valeur prédéterminée de pression, et dans lequel le côté propergol (61) du réservoir à soufflet (48) communique avec le propulseur (56) et le réservoir de propergol (14, 16).

2. Système de propulsion de satellite conforme à la revendication 1, comprenant en outre:

un second tuyau (65) faisant communiquer la source de gaz sous pression (24) avec le côté gaz (63) du réservoir à soufflet (48);

des seconds moyens formant valve (59) sur le second tuyau (65);

un troisième tuyau (69) faisant communiquer le propulseur (56) avec le côté propergol (61) du réservoir à soufflet (48);

des troisièmes moyens formant valve (62) sur le troisième tuyau (69) pour commander le flux de propergol vers le propulseur (56);

un quatrième tuyau (71) communiquant avec le côté gaz (63) du réservoir à soufflet (48) pour la purge du côté gaz (63) du soufflet (52); et

des quatrièmes moyens formant valve (66) sur le quatrième tuyau (71), dans lequel, lorsque le côté propergol (61) du soufflet (52) est rempli de propergol, le côté gaz (63) du soufflet (52) peut être pressurisé, mettant ainsi en pression le propergol qui est transmis au propulseur (56) lorsque les troisièmes moyens formant valve (62) sont ouverts, et dans lequel le côté propergol (61) du soufflet (52) peut être rempli à nouveau de propergol en ouvrant les quatrièmes moyens formant valve (66) et en fermant les seconds moyens formant valve (59), purgeant ainsi le côté gaz (63) du réservoir à soufflet (48), et permettant un propergol de remplir à nouveau le côté propergol (61) du réservoir à soufflet (48).

3. Système de propulsion de satellite conforme à la revendication 2, dans lequel le quatrième tuyau (71) est mis à la purge vers l'espace.

4. Système de propulsion de satellite conforme à la revendication 2, dans lequel le système de propulsion est fixé à une partie rotative du satellite, de sorte que, lorsque le réservoir à soufflet (48) est monté sur cette partie rotative du satellite, la force centrifuge agit sur le soufflet (52) pour provoquer un changement des volumes des côtés gaz (63) et propergol (61) du soufflet; et dans lequel le quatrième tuyau (71) communique avec le réservoir de propergol (14, 16).

5. Système de propulsion de satellite conforme à la revendication 4, dans lequel une masse est fixée au soufflet (52) pour augmenter la valeur de la force centrifuge agissant sur le soufflet (52).

6. Système de propulsion de satellite conforme à l'une quelconque des revendications précédentes, dans lequel le réservoir à soufflet (48) comprend en outre une butée mécanique (53) pour limiter la gamme des changements de volume du côté propergol (61) du réservoir à soufflet (48).

7. Système de propulsion de satellite conforme à l'une quelconque des revendications précédentes, dans lequel le réservoir à soufflet (48) comprend en outre des moyens pour détecter le volume de propergol dans le côté propergol (61) du réservoir à soufflet (48).

8. Système de propulsion de satellite conformé à la revendication 7, dans lequel les moyens de détection comprennent un commutateur de limite (55, 57) qui détecte la position du soufflet (52).

9. Procédé pour faire fonctionner un système de propulsion de satellite, du type comprenant une source de pression de gaz (24), fournissant une pression de gaz à une première valeur prédéterminée, et un réservoir de propergol (14, 16), chargé en gaz sous une seconde valeur prédéterminée, sensiblement inférieure à la première valeur prédéterminée, contenant du propergol liquide,

comprenant un réservoir à soufflet (48) muni intérieurement d'un soufflet (52) pouvant se contracter, divisant ce réservoir à soufflet (48) en un côté gaz (63) et un côté propergol (16), les volumes relatifs du côté gaz (63) et du côté propergol (61) variant lorsque les soufflet (52) se contracte ou se dilate, le côté propergol (61) communiquant avec un propulseur (56) et le réservoir de propergol (14, 16), et le côté gaz (63) communiquant avec la source de pression de gaz (24);

comprenant les étapes suivantes:

passage du propergol au propulseur (56) par fermeture d'un premier tuyau (67) entre le réservoir de propergol (14, 16) et le côté propergol (61) du réservoir à soufflet (48);

ouverture d'un second tuyau faisant communiquer la source de pression de gaz (24) avec le côté gaz du réservoir à soufflet (48); et

remplissage à nouveau du côté propergol (61) du réservoir à soufflet (48) par;

fermeture du second et du troisième tuyau;

mise en purge du côté gaz (63) du réservoir à soufflet (48), de sorte que la pression dans le côté gaz (63) soit inférieure à la pression du propergol dans le réservoir de propergol (14, 16); et

ouverture du premier tuyau, ce qui provoque l'écoulement du propergol vers le côté propergol (61) du réservoir à soufflet (48).

10. Procédé pour faire fonctionner un système de propulsion de satellite conforme à la revendication 9, dans lequel la pressurisation du côté gaz (63) du réservoir à soufflet (48) est effectuée en fournissant une pression relativement constante de la source de pression de gaz (24) pendant toute l'étape de passage du propergol au propulseur (56).

11. Procédé pour faire fonctionner un système de propulsion de satellite conforme à la revendication 9, dans lequel la pressurisation du côté gaz (63) du réservoir à soufflet (48) est effectuée en ne mettant sous pression le côté gaz (63) du soufflet (52) que lorsque le côté propergol (61) du soufflet (52) est complètement rempli à nouveau, le soufflet (52) fonctionnant ensuite en régime de dépressurisation quand le propergol est transmis au propulseur (56).

12. Procédé pour faire fonctionner un système de propulsion de satellite conforme à la revendication 9, comprenant en outre l'étape suivante: détection de la position du soufflet (52) du réservoir à soufflet (48) pour commander les étapes de passage du propergol et de remplissage à nouveau en propergol.

13. Procédé pour faire fonctionner un système de propulsion de satellite conforme à la revendication 9, dans lequel la mise en purge du côté gaz (63) du soufflet (52) s'effectue en exposant à l'espace le côté gaz (63) du réservoir à soufflet (48).

14. Procédé pour faire fonctionner un système de propulsion de satellite conforme à la revendication 9, comprenant en outre l'étape de mise en rotation du réservoir à soufflet (48) avec une partie rotative du satellite, de sorte que la force centrifuge agisse sur le soufflet (52) pour provoquer un changement de volume du soufflet (52), de sorte que l'étape de purge du côté gaz (63) procède par réduction de la pression dans ce côté gaz (63) du soufflet (52), déclenchant ainsi l'étape de remplissage à nouveau en propergol.

15. Procédé pour faire fonctionner un système de propulsion de satellite conforme à la revendication 14, dans lequel l'étape de réduction de la pression est effectuée en mettant en communication le côté gaz (63) du réservoir à soufflet (48) avec les réservoirs de propergols (14, 16).

Fig-1

1

EP 0 257 040 B1

Fig-2

PRIOR ART

2

_Fig-3_

_Fig-4_

_Fig-5_

_Fig-6_

*Fig-7*

*Fig-10*

_Fig-9_

_Fig-8_

6